# EUROPEAN PATENT APPLICATION

(11) **EP 3 998 408 A1**
(43) Date of publication of application: **18.05.2022**
(21) Application number: 21159476.7
(22) Date of filing: 26.02.2021
(51) Int. Cl.: F04D 29/32, F01D 5/30

(54) **ROTOR ASSEMBLY**

(71) Applicant: Lilium eAircraft GmbH, 82234 Wessling (DE)
(72) Inventor: VERMEIREN, Sébastien, 80997 München (DE)
(74) Representative: Feller, Frank

(57) **Abstract**

Rotor assembly (10), comprising a plurality of individual blade elements (12a, 12b, 12c), a first and a second ring element (14a, 14b), wherein the first and second ring elements (14a, 14b) are directly or indirectly coupled to each other by means of at least coupling unit thus forming a hub section (14) of the rotor assembly (10), wherein further each of the blade elements (12a, 12b, 12c) engages with at least one of the ring elements (14a, 14b) such that the blade elements (12a, 12b, 12c) are equidistantly distributed around the circumference of the hub section (14).

## Description

The present invention relates to a rotor assembly, comprising a plurality of individual blade elements extending from a hub section.

Such rotor assemblies are used in different types of devices, such as fans, compressors and turbines, wherein the individual blade elements extend outward from the hub section, which also serves as an interface to a superordinate structure. While the number and particular shape of the individual blade elements strongly depend on the particular use case of the rotor assembly, there are certain scenarios in which the highest possible number of blades is desired, for example for reasons of efficiency or the reduction of operating noise.

Traditionally, such rotor assemblies have mainly been manufactured by two different methods, on the one hand by providing a dovetail interface to each of the individual blade elements and corresponding accommodation sections for the dovetail interfaces in the hub section of the rotor assembly, while, on the other hand, it is also known to manufacture so-called blisks, in which the entire rotor assembly is machined from a single monolithic block, such that the hub section, the plurality of blades and possibly also an interface section are comprised in a single one-piece entity, or in which the individual blade elements are welded to the hub section.

However, both of the above-mentioned manufacturing techniques have their drawbacks, especially in cases in which the highest possible number of blades shall be provided to the hub section of the corresponding rotor assembly. In particular, blade elements attached to a hub section through a dovetail interface are generally heavy, as not only the dovetails themselves contribute to the weight of the assembly, but also the hub section needs to be constructed in a relatively thick manner. Additionally, there needs to be a sufficient blade-to-blade distance, in order to enable the forces present during operation of the rotor assembly to be transmitted from the blade elements to the hub section and further to an interface section through the individual dovetail interfaces. Said required blade-to-blade distance limits the maximum number of blades that can be provided to a single hub section with such manufacturing methods.

On the other hand, in the case of blisks, the total mass of the rotor assembly may be lower, since the necessity of dovetail interfaces has been removed from the rotor, however, a minimum blade-to-blade distance still needs to be ensured, in order to allow a sufficiently sized cutting or welding tool to pass between neighboring blades to machine or to weld the blades to the hub in an economical manner. While very small tools might be used in order to reduce the blade-to-blade distance, this measure would rapidly increase the machining time as well as the associated costs and would possibly be prone to failure.

It is therefore the object of the present invention to provide a rotor assembly with a plurality of individual blade elements, which is on the one hand relatively easy and cheap to manufacture, while on the other hand allows for a minimal blade-to-blade distance and as such the highest possible number of blade elements around the circumference of the hub section without weakening the overall structural integrity of the rotor assembly.

For this purpose, the rotor assembly according to the present invention comprises a plurality of individual blade elements and a first and a second ring element, wherein the first and second ring elements are directly or indirectly coupled to each other by means of at least one coupling unit thus forming a hub section of the rotor assembly, wherein further each of the blade elements engages with at least one of the ring elements, such that the blade elements are distributed around the circumference of the hub section. While in some embodiments of the present invention, the blade elements may be equidistantly distributed, similar constructions can also allow for irregular blade element spacing, for example by using different widths of the individual blade elements.

Thus, by forming the hub section of the rotor assembly according to the invention by means of a first and a second ring element, the need for a circumferential distance between the individual blade elements around the hub no longer needs to be observed and there will be no tool required to access the blade-to-blade spacing, such that generally speaking, no constraints on the blade-to-blade distance are given, since the circumferential stack of blades is being held together by at least one of the two ring elements.

While there are also basically no constraints on the exact geometry of the ring elements as long as they are disposed in a concentric manner, in certain scenarios, the first ring element may have a smaller diameter than the second ring element. Such configurations may be especially beneficial in the use case of fans and in particular ducted fans, in which rotor assemblies with frustoconically shaped hub sections are known to increase the efficiency and performance of such fans.

In order to achieve a minimal blade-to-blade distance and thus the highest possible number of blade elements in the rotor assembly according to the invention, as well as in order to be able to distribute forces between the individual blade elements in an advantageous manner, each of the blade elements may be in contact with its two neighboring blade elements along the circumferential stack of blade elements. For example, the individual blade elements may be formed such that in their base portion they comprise side walls, which are oriented radially towards the center of the hub section, such that each pair of neighboring blade elements is in planar contact along the corresponding radially oriented side walls.

Alternatively, each of the blade elements may be provided with an interlocking system, which is adapted to interact with the interlocking systems of its two neighboring blade elements. In such embodiments, additional forces can be distributed between the individual blade elements, such as tilting forces acting on certain blade elements, bird ingestion forces, gyroscopic forces, thrust, etc., which do not have to be transmitted and distributed by means of the ring elements but can directly be distributed among the circumferential stack of blade elements through the corresponding interlocking systems.

In order to counteract on expected centrifugal forces leading to stress on the blade elements in operation of the rotor, the ring elements may apply a compressive force on the blade elements in the radial direction of the rotor assembly. For example, the ring elements may be press-fitted with corresponding extensions of the blade elements in their base sections, such that the blade elements are compressed onto one another towards the central rotor rotation axis in order to improve the fatigue behavior of the rotor assembly. Alternatively, the contact area between the blade elements and the ring elements may be sloped such that an axial pretension can be converted into a radial compression, thus achieving the same benefits.

Furthermore, in order to provide a redundant load path in case of failure of one of the ring elements, said ring elements may each be surrounded by a respective additional outer ring element, which can for example be made from a composite material. Said additional ring element provides an additional layer of safety in that it may prevent a full burst of the rotor assembly in case of failure of a single blade element. In contrast, in case of the above-discussed blisks, the failure of a single blade element will with a high probability lead to a full rotor burst such that blisks have to be constructed stronger and heavier. By containing such single blade element failures and preventing full rotor assembly bursts in rotor assemblies according to the present invention, the released energy in such accidents can be reduced by more than a factor of 10, which in turn also allows reducing external safety measures, which may lead to reductions in weight and cost of the device in which the rotor assembly is installed.

In order to facilitate the interfacing of the rotor assembly according to the invention to superordinate structures or external components, at least one of the ring elements may be integrally provided with a flange member for connecting the rotor assembly to such an external component, which may for example be a spinner, bearing holder, shaft, etc.

In order to achieve sufficient strength and rigidity of the individual blade elements, they each may comprise a base portion and an actual blade portion extending from the base portion on the radially outer side of the rotor assembly, and preferably in the transition region between the base portion and the blade portion at least one fillet is provided and/or the base portion is provided on its radially inner side with at least one rib, preferably extending between the two ring elements.

Also, the blade elements and/or at least one of the ring elements may be made from a metal or composite material, for example by means of a forging, a casting or an additive process. Since usually a compromise between weight and stiffness of the respective component needs to be found for each individual use case of such rotor assemblies, light-weight yet strong metals and metal alloys such as titanium, aluminum, magnesium and their respective alloys as well as steel may be employed, while new developments in composite material also enable their use in such assemblies.

In a possible embodiment of the rotor assembly according to the invention, each of the blade elements may be fastened to both of the ring elements by means of at least one respective fastening element, such as screws, threaded rods, studs and nuts or rivets, such that the blade elements and fastening elements also act as the coupling units between the two ring elements. By coupling each of the blade elements to both of the ring elements and having them act as parts of the coupling units as well, a design with a minimal number of required parts is achieved, thus minimizing costs and weight of the respective rotor assemblies, while on the other hand the individual rotor elements become easily replaceable in case the fastening elements are chosen to be removable, such as in the case of screws or threaded rods.

While the assembly and disassembly of the rotor assembly according to the invention might be easiest in cases in which the blade elements are coupled to the first and second ring elements with identical fastening elements, in other variations of the previously discussed embodiment, it might be beneficial if the fastening elements are different for the two ring elements. For example, in certain embodiments screws may be used to couple the blade elements to the first ring element, while inserted pins may be used to couple the blade elements to the second ring element.

In an alternative embodiment of the present invention, at least one of the ring elements may comprise a number of ridges equidistantly extending towards the other ring element, wherein the coupling units act on the tips of said ridges in order to provide a direct coupling between the ring elements, wherein the blade elements are held in the spaces formed between the ridges by means of base portions with dimensions larger than the distances between the ridges.

In yet another embodiment of the present invention, the ring elements may be provided with locating elements equidistantly extending towards the corresponding other ring element, and the blade elements may be provided with recesses, into which the locating elements extend, and wherein the at least one coupling unit is formed separately from the blade elements. In said embodiment, the orientation of the individual blade elements may be achieved by means of an interaction between the recesses and the locating elements in case there is a positive fit between the two components, while alternatively the blade elements may be provided with interlocking systems as outlined above, such that the orientation of the blade elements with respect to one another and with respect to the ring elements is ensured by the interaction between the interlocking systems of pairs of neighboring blade elements.

While the rotor assembly according to the invention may be beneficially used in different types of devices and scenarios, one particularly suitable use case is a ducted fan engine, comprising a cylindrical duct, a rotor assembly according to the invention and a motor driving the rotor assembly. Such ducted fan engines can in particular be used in aircrafts, for example electrical propulsion aircrafts with vertical takeoff and landing ability.

Additional features and advantages of the present invention will become even clearer from the following description of embodiments thereof, when taken together with the accompanying figures, which show in particular:
- Fig. 1: a first embodiment of a rotor assembly according to the invention in an isometric view;
- Figs. 2a-2c: three views of the rotor assembly of Fig. 1 with all but one blade elements removed;
- Fig. 3: one of the ring elements of a hub section of a rotor assembly according to a second embodiment of the invention; and
- Fig. 4: a number of blade elements of a third embodiment of the present invention.

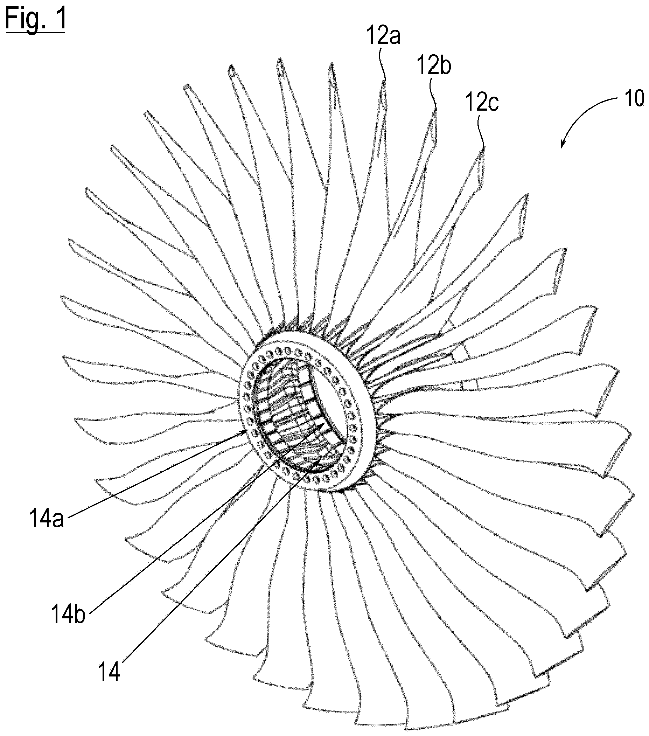

In Fig. 1, a first embodiment of a rotor assembly according to the present invention is shown in an isometric view and generally denoted with the reference numeral 10. Said rotor assembly 10 comprises a number of identical individual blade elements 12a, 12b, 12c, ... which are located with minimal blade-to-blade distance forming a circumferential stack around a hub section 14, which is comprised of a first ring element 14a and a second ring element 14b of which the diameter of the first ring element 14a is smaller than the diameter of the second ring element 14b. It can be seen from Fig. 1 that the two ring elements 14a and 14b are not directly coupled to one another but only indirectly by means of the blade elements 12a, 12b, 12c...

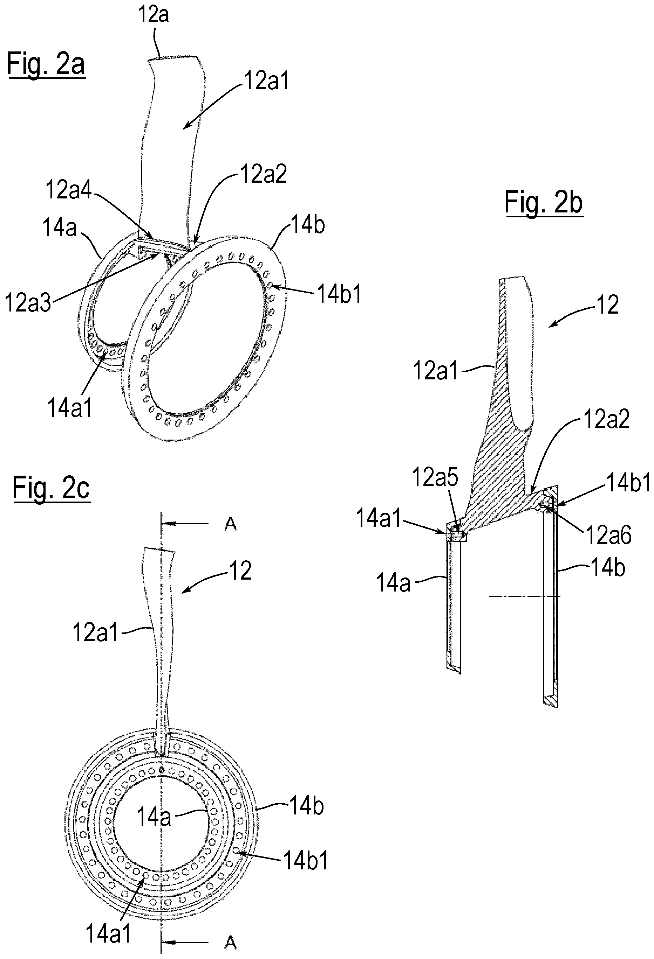

In the following, with reference to the three views of Figs. 2a to 2c, in which all of the blade elements apart from a single blade element 12a have been removed from the rotor assembly 10, the design and arrangement of the blade elements 12a, 12b, ... as well as the first and second ring elements 14a and 14b will be discussed. Therein, Fig. 2a is an isometric view of the assembly, Fig. 2c is a front view thereof and Fig. 2b is a section taken along section line A-A in Fig. 2c.

The blade element 12a comprises a blade section 12a1 which extends from a base portion 12a2 and ends in a blade tip, which is cut in such a manner that the rotor assembly 10 of Fig. 1 is suitable to be employed in a ducted fan engine.

As can specifically be seen in Fig. 2a, opposite to the blade section 12a1 on the radially inward side of the base section 12a2, a rib 12a3 extending between the two ring elements 14a, 14b is provided on the base portion 12a2 of the blade element 12a, while in the transition region between the base portion 12a2 and the blade portion 12a1, a fillet 12a4 is provided, wherein both the rib 12a3 and the fillet 12a4 increase the strength and rigidity of the blade element 12a.

In particular, in the cut section view of Fig. 2b it can be further seen that the blade element 12a is provided with two apertures 12a5 and 12a6, which are aligned with corresponding bores 14a1 and 14b1 provided in the ring elements 14a and 14b. Fastening elements such as screws, threaded rods or rivets can be inserted into the bores 14a1, 14b1 and the apertures 12a5 and 12a6 in order to couple the blade element 12a to both of the ring elements 14a and 14b.

As can further best be seen in Fig. 2c and also in Fig. 1, the ring elements 14a and 14b are provided with a number of bores 14a1 and 14b1 corresponding to the intended number of blade elements for the assembly 10, which are evenly distributed around their circumferences. Once all blade elements 12a, 12b, 12c, ... are thus coupled to the first ring element 14a and subsequently second ring element 14b is further attached to the thus aligned blade elements 12a, 12b, 12c, ..., the mounted configuration of Fig. 1 is achieved, in which each of the blade elements 12a, 12b, 12c, ... is in contact with their corresponding neighboring blade elements by their base portions 12a2, wherein the ring elements 14a and 14b apply a compressive force in the radial direction on the blade elements 12a, 12b, 12c,..., in order to preload them in the radial direction.

By means of the planar contact between the individual blade elements 12a, 12b, 12c, ..., a maximum density of blade elements around the circumference of the hub section 14 of the rotor assembly 10 is achieved with minimal blade-to-blade distance, while forces during operation of the rotor assembly 10 can be evenly distributed between the individual blade elements 12a, 12b, 12c, ..., thus reducing the load on the ring elements 14a and 14b.

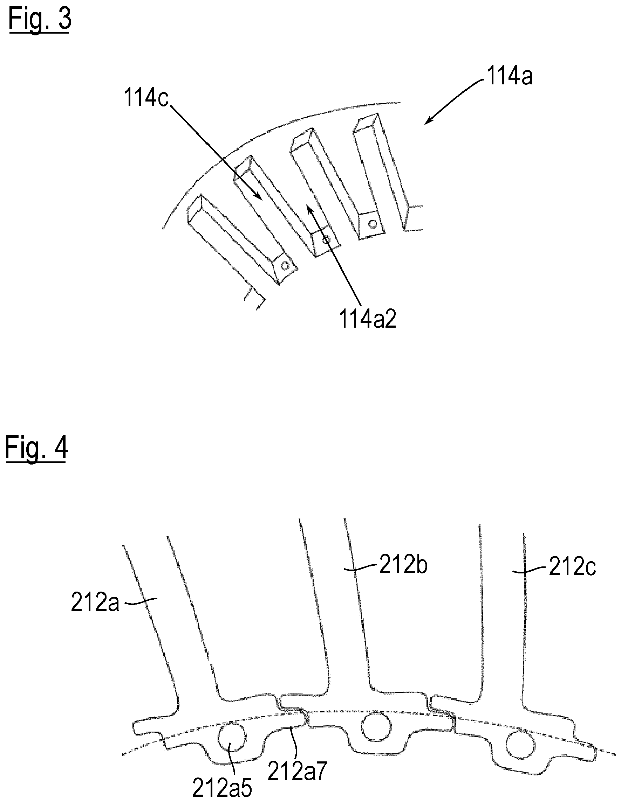

Fig. 3 shows a ring element 114a of a second embodiment of the present invention, wherein the first ring element 114a comprises a number of ridges 114a2 extending towards a second ring element (not shown) which basically corresponds so the second ring element 14b of the first embodiment discussed above. By means of coupling the tips of the ridges 114a2 to the second ring element, spaces 114c are formed between the individual ridges 114a2, in which blade elements can be held by means of their base portions, which have to exhibit larger dimensions than the distances between the ridges 114a2.

In this second embodiment, the ring elements 114a and are directly coupled to one another, while the blade elements still may be in contact with their respective neighboring blade elements by means of their base portions, such that the same advantages as with the embodiment of Fig. 1 can be achieved.

Lastly, Fig. 4 shows a number of blade elements 212a to 212c, which are provided with interlocking features 212a7, 212b7, ... and are adapted to interact with one another in a rotor assembly according to a third embodiment of the present invention. In said third embodiment, the respective orientation among the blade elements 212a to 212c is achieved by means of the interlocking systems 212a7, 212b7, ..., such that no press-fit or form-fit is necessary with the corresponding ring elements of said embodiment and thus it may be sufficient to extend locating elements of the ring elements into recesses 212a5, 212b5, ... of the blade elements 212a, 212b, ... thus not fixedly coupling the blade elements 212a, 212b, ... to the ring elements but rather externally coupling the corresponding ring elements to one another by means of a separate coupling unit. This third embodiment also guarantees an easy assembly as well as a minimal blade-to-blade distance.

## Claims

1. Rotor assembly (10), comprising:
- a plurality of individual blade elements (12a, 12b, 12c);
- a first and a second ring element (14a, 14b);
wherein the first and second ring elements (14a, 14b) are directly or indirectly coupled to each other by means of at least one coupling unit thus forming a hub section (14) of the rotor assembly (10);
wherein further each of the blade elements (12a, 12b, 12c) engages with at least one of the ring elements (14a, 14b) such that the blade elements (12a, 12b, 12c) are distributed around the circumference of the hub section (14).

2. Rotor assembly (10) according to claim 1,
wherein the first ring element (14a) has a smaller diameter than the second ring element (14b).

3. Rotor assembly (10) according to any of the preceding claims,
wherein each of the blade elements (12b) is in contact with its two neighboring blade elements (12a, 12c).

4. Rotor assembly according to claim 3,
wherein each of the blade elements (212a, 212b, 212c) is provided with an interlocking system (212a7, 212b7, 212c7) which is adapted to interact with the interlocking systems (212a7, 212b7, 212c7) of its two neighboring blade elements (212a, 212b, 212c).

5. Rotor assembly (10) according to any of the preceding claims,
wherein the ring elements (14a, 14b) apply a compressive force in the radial direction on the blade elements (12a, 12b, 12c).

6. Rotor assembly (10) according to any of the preceding claims,
wherein at least one of the ring elements (14a, 14b) is surrounded by a respective additional outer ring element, for example made from a composite material.

7. Rotor assembly (10) according to any of the preceding claims,
wherein at least one of the ring elements (14a, 14b) is integrally provided with a flange member for connecting the rotor assembly (10) to an external component.

8. Rotor assembly (10) according to any of the preceding claims,
wherein the blade elements (12a, 12b, 12c) each comprise a base portion (12a2, 12b2, 12c2) and a blade portion (12a1, 12b1, 12c1) extending from the base portion (12a2, 12b2, 12c2) on its radially outer side, wherein preferably in the transition region between the base portion (12a2, 12b2, 12c2) and the blade portion (12a1, 12b1, 12c1) at least one fillet (12a4) is provided and/or the base portion (12a2, 12b2, 12c2) is provided on its radially inner side with at least one rib (12a3), preferably extending between the two ring elements (14a, 14b).

9. Rotor assembly (10) according to any of the preceding claims,
wherein the blade elements (12a, 12b, 12c) and/or at least one of the ring elements (14a, 14b) is made from a metal or composite material, for example by means of a forging, casting or additive process.

10. Rotor assembly (10) according to any of the preceding claims,
wherein each of the blade elements (12a, 12b, 12c) is fastened to both of the ring elements (14a, 14b) by means of at least one respective fastening element, such as screws, threaded rods, studs and nuts or rivets, such that the blade elements (12a, 12b, 12c) and fastening elements act as the coupling units.

11. Rotor assembly according to one of claims 1 to 9,
wherein at least one of the ring elements (114a) comprises a number of ridges (114a2) equidistantly extending towards the other ring element (114b), wherein the coupling units act on the tips of the ridges (114a2) in order to provide a direct coupling between the ring elements (114a, 114b),
wherein the blade elements are held in the spaces (114c) formed between the ridges (114a2) by means of base portions with dimensions larger than the distances between the ridges (114a2).

12. Rotor assembly according to one of claims 1 to 9,
wherein the ring elements are provided with locating elements equidistantly extending towards the other ring element,
wherein the blade elements (212a, 212b, 212c) are provided with recesses (212a5, 212b5, 212c5), into which the locating elements extend, and
wherein the at least one coupling unit is formed separately from the blade elements (212a, 212b, 212c).

13. Ducted fan engine, comprising a cylindrical duct, a rotor assembly (10) according to any of the preceding claims and a motor driving the rotor assembly.

14. Aircraft, comprising at least one ducted fan engine according to the preceding claim.
